# EUROPÄISCHE PATENTSCHRIFT

(11) **EP 1 165 349 B1**
(45) Veröffentlichungstag und Bekanntmachung des Hinweises auf die Patenterteilung: **09.06.2004**
(21) Anmeldenummer: 00914152.4
(22) Anmeldetag: 17.03.2000
(51) Int. Cl.: B60R 21/28

(54) **GESTEUERTES AIRBAGMODUL**
CONTROLLED AIRBAG MODULE
AIRBAG COMMANDE

(30) Priorität: 19.03.1999 DE 19912369
(43) Veröffentlichungstag der Anmeldung: 02.01.2002
(73) Patentinhaber: Siemens Restraint Systems GmbH, 63755 Alzenau (DE)
(72) Erfinder: HOFFMANN, Jörg, D-66636 Theley (DE)
(74) Vertreter: Fuchs Mehler Weiss & Fritzsche
(86) Internationale Anmeldenummer: PCT/EP2000/002397
(87) Internationale Veröffentlichungsnummer: WO 2000/056580

(56) Entgegenhaltungen:
- EP-A- 0 536 677
- EP-A- 0 592 879
- EP-A- 0 684 167
- EP-A- 0 790 157
- WO-A-97/26160
- DE-A- 4 041 049
- DE-A- 19 640 322
- DE-A- 19 805 063
- US-A- 5 234 229
- US-A- 5 366 242
- US-A- 5 413 378
- US-A- 5 551 723
- US-A- 5 709 405
- US-A- 5 762 367
- US-A- 5 775 729

## Beschreibung

Die Erfindung betrifft ein Airbagmodul, welches wenigstens einen in einem aus mehreren Teilen bestehenden Modulgehäuse angeordneten Gasgenerator und einen Gassack aufweist, in den der wenigstens eine Gasgenerator auf ein Auslösesignal hin einen gesteuerten Gasmassenstrom einleiten kann.

In jüngerer Zeit sind vermehrt Unfälle mit Fahrzeuginsassen aufgetreten, bei denen die Auslösung eines Airbags schwere bis tödliche Verletzungen hervorrief. Diese Verletzungen sind zurückzuführen auf eine hohe Aggressivität der Gassäcke, die für die Fahrzeuginsassen besonders dann gefährlich sind, wenn sich diese im näheren Modulbereich befinden. In diesem Zusammenhang spricht man auch von einer sogenannten Out-of-Position-Sitzposition des Fahrzeuginsassen. Eine Lösung des Problems der Aggressivität der Gassäcke wird seit geraumer Zeit darin gesehen, den Fahrzeuginnenraum zu sensieren, um abhängig von dem Sensierungsergebnis den Airbag entsprechend aktiv zu schalten bzw. vollkommen abzuschalten.

Einen guten Überblick über Airbagmodule, die sich mit dem erwähnten Problem beschäftigen, gibt die US-A-5 413 378. Bei dem darin vorgestellten System findet ein sogenanntes "Venting" Einsatz, welches den Gasstrom und somit den Innendruck des Gassackes, angesteuert durch einen Mikroprozessor, zum Beispiel durch Öffnen eines Ventils steuert. Voraussetzung hierfür ist jedoch eine elektronische Sensierung des Fahrzeuginnenraumes.

Ausgestaltungen von Gasmassenstromsteuerungen durch ein Ventil sind darüberhinaus aus den Druckschriften DE-A-40 41 049, US-A-5 709 405, DE-A-197 02 259, DE-A-196 20 617 und US-A-5 513 879 bekannt. Bei den darin beschriebenen Systemen werden sowohl Zylinderventile, gegeneinander verschiebbare Platten oder Hülsen, als auch Umlenkmechanismen beschrieben, die mittels elektrisch verstellbarer Motoren, elektromagnetisch, pyrotechnisch oder piezoelektrisch gesteuert werden.

Die weiteren Druckschriften EP-A-0 536 677 und US-A-5 366 242 beschreiben eine passive Ansteuerung der Ventile durch Bimetallfedern, die allerdings lediglich zur Temperaturkompensation dient.

Auch das Entfaltungsverhalten von Gassäcken der Airbagmodule ist bereits im Stand der Technik beleuchtet worden. Die Druckschriften EP-A-0 812 741 und US-A-5 762 367 beschäftigen sich mit der Sensierung des Entfaltungsverhaltens und -zustands von Gassäcken. Die Sensierung erfolgt mittels Kordeln oder Bändern, die an der frontalen Innenseite des Gassackes befestigt sind und während der Entfaltung mitgeführt werden.

Schließlich ist noch eine direkte Ansteuerung von Airbagöffnungen zum Steuern des Airbaginnendruckes entsprechend dem Entfaltungszustand des Gassackes in der DE-A-196 40 322 beschrieben. Sämtliche vorerwähnten bekannten Systeme versuchen ein Rückhaltesystem mit aktiver und passiver Sensorik und Steuerung "intelligenter" zu machen, erhöhen jedoch den Applizierungsaufwand und vor allem die Kosten des Rückhaltesystems beträchtlich.

Vor diesem Hintergrund ist es die Aufgabe der vorliegenden Erfindung ein Airbagmodul vorzuschlagen, welches aufgrund seines Aufbaus in der Lage ist, konstruktionsbedingt vielseitig eingesetzt werden zu können, also beispielsweise die oben erwähnte Problematik hinsichtlich der Aggressivität eines Gassackes im Falle der Out-of-Position-Sitzposition des Fahrzeuginsassens zu lösen und/oder beispielsweise einen Beitrag zur einfacheren und sicheren Öffnung einer Modulkappe im Armaturenbrett des Fahrzeuges nach Auslösung des Gasgenerators zu leisten.

Aus dem gattungsgemäßen Patentschrift US 5 234 229 A ist ein Airbagmodul bekannt, wobei der von dem Gasgenerator nach Auslösung erzeugte Gasmassenstrom durch ein rein mechanisches Steuerelement in zwei Teilströme gesteuert aufteilbar ist, wobei der erste Teilstrom des Gasmassenstromes in einen ersten Teil des Modulgehäuses und der zweite Teilstrom des Gasmassenstromes in einen zweiten Teil des Modulgehäuses einleitbar ist.

Dieses allgemeine Konstruktionsprinzip erlaubt eine Reihe von Realisierungen im Hinblick auf die schon erwähnte Herabsetzung der Aggressivität eines Gassackes sowie das Öffnungsverhalten einer Modulkappe im Armaturenbrett eines Fahrzeuges. Hierzu wird weiter unten näher ausgeführt.

Gemäß der Erfindung besteht das Steuerelement aus einem mechanischen Verteilerelement, das über den Gasauslaß des Gasgenerators verschieblich geführt ist und dabei wenigstens zwei stabile Rastzustände einnehmen kann, wobei der erste Teilstrom des Gasmassenstromes in eine erste Kammer einströmt, die gebildet ist aus einer ersten Seite des Verteilerelementes, dem ersten Teil des Modulgehäuses sowie einem den Gasgenerator zugeordneten Gassack, und der zweite Teilstrom des Gasmassenstromes in eine zweite Kammer einströmt, die gebildet ist aus einer zweiten Seite des Verteilerelementes und dem zweiten Teil des Modulgehäuses.

Durch die Aufteilung des Gasmassenstromes in zwei Teilströme und das erwähnte Einleiten in eine erste bzw. zweite Kammer lassen sich verschiedene Funktionen steuern. Besonderes Augenmerk wird darauf gelegt, daß das Steuerelement in dieser Ausführungsform als rein mechanisches Verteilerelement ausgeführt ist. Dieses ist über den Gasauslaß des Gasgenerators verschieblich geführt, wobei es wenigstens zwei stabile Rastzustände einnehmen kann. Dies bedeutet, daß das Verteilerelement in einem stabilen Rastzustand den ersten Teilstrom des Gasmassenstromes in die erste Kammer leitet und nach Überführung in einen weiteren, wenigstens zweiten stabilen Rastzustand den zweiten Teilstrom des Gasmassenstromes in die zweite Kammer einleitet. Der ersten Kammer zugeordnet ist der Gassack, der vorliegend als Bestandteil der ersten Kammer bezeichnet wird. Weiteres Element der ersten Kammer, d. h. die Wandung dieser Kammer bildendes Element, ist der erste Teil des Modulgehäuses sowie eine Seite des Verteilerelementes, das im ersten stabilen Rastzustand verharrt. Nach Ansteuerung des Verteilerelementes so, daß es in den wenigstens zweiten stabilen Rastzustand überführt wird, strömt der zweite Teilstrom des Gasmassenstromes in die zweite Kammer, deren Wandung gebildet ist aus dem zweiten Teil des Modulgehäuses und deren Bodenelement die zweite Seite des Verteilerelementes bildet. Das Verteilerelement trennt also die erste von der zweiten Kammer und leitet dementsprechend die Teilströme in die eine oder andere Kammer.

Gemäß der Erfindung ist das Steuerelement gebildet durch eine polystabile Kippfeder mit einer Durchbrechung, durch die hindurch der Gasgenerator beim Wechsel von einem zum anderen stabilen Rastzustand der Kippfeder greift. Die Kippfeder ist also über den (meist topfförmigen) Gasgenerator gesetzt und wird in einem stabilen Rastzustand bspw. so aufgehängt, daß ohne Betätigung des Steuerelementes zunächst der erste Teilstrom des Gasmassenstromes in die erste Kammer und damit in den Gassack einströmt. Wird die Kippfeder betätigt, so daß sie in ihren zweiten Rastzustand überführt wird, überstreicht sie beispielsweise den Gasauslaß des Gasgenerators und lenkt danach den Gasmassenstrom um. Die Kippfeder nimmt in diesem Ausführungsbeispiel also auch eine Dichtfunktion zwischen der ersten und der zweiten Kammer wahr.

Besonders bevorzugt ist eine Ausführungsform der Erfindung, bei der die Ausströmöffnungen des Gasgenerators unmittelbar als Gasauslaß dienen. Diese Ausströmöffnungen werden durch die Kippfeder in jeweils einem Rastzustand von der Richtung des Gassackes aus gesehen zumindest teilweise abgedeckt.

Gemäß einer vorteilhaften Weiterbildung ist vorgesehen, daß das mechanische Verteilerelement eine stufenförmige bzw. bezüglich der Längsachse des Modulgehäuses schräge Trennfläche für den Gasmassenstrom ausbildet. Eine etwa in der Mitte des Steuerelementes befindliche sickenförmige Trennfläche führt dazu, daß im ersten stabilen Rastzustand der erste Teilstrom des Gasmassenstromes etwa nur die Hälfte des Gesamtgasmassenstromes, welchen der Gasgenerator erzeugen kann, umfaßt. Allerdings kann durch andere Anordnung der Sicke leicht ein anderes Verhältnis erzeugt werden.

Gemäß einer Weiterbildung ist vorgesehen, daß der zweite Teil des Modulgehäuses eine Gasausströmöffnung hin zum Fahrzeuginnenraum aufweist. In diesem Falle wird der zweite Teilstrom des Gasmassenstromes in den Fahrzeuginnenraum geleitet werden.

Eine andere Möglichkeit ist darin zu sehen, daß der zweite Teil des Modulgehäuses über eine Druckkammer verfügt, in welche der zweite Teilstrom des Gasmassenstromes einleitbar ist, der darin einen Gasdruck aufbaut, welcher zu einer Reaktionsbewegung von Teilen des Modulgehäuses führt.

Der rückwärtig, d. h. nach hinten geleitete zweite Gasstrom baut also innerhalb des Modulgehäuses einen Druck auf, der seinerseits zu einer Reaktionsbewegung von Teilen des Modulgehäuses führt. Dies kann gemäß einer besonders bevorzugten Ausführungsform, bei der die bewegten Teile des Modulgehäuses mit einer Abdeckung des Airbagmoduls im Armaturenbrett eines Fahrzeuges verbunden sind, dazu benutzt werden, um die Reaktionsbewegung der Teile des Modulgehäuses zu einer Bewegung der Abdeckung in das Armaturenbrett hinein umzusetzen.

Hiermit wird die Gefahr gebannt, daß nach Auslösung des Airbagmoduls die Modulkappe oder die Abdeckung in den Fahrzeuginnenraum gesprengt wird, wo sie beim Kraftfahrzeuginsassen schwere Verletzungen hervorrufen könnte. Stattdessen wird die erwähnte Reaktionsbewegung dazu ausgenutzt, die Abdeckung oder Modulkappe zusammen mit anderen Teilen des Modulgehäuses in das Armaturenbrett hinein zu bewegen, wo sie für den Kraftfahrzeuginsassen keine Gefahr mehr darstellt.

Gemäß einer anderen vorteilhaften Ausführungsform ist vorgesehen, daß die Ansteuerung des Steuerelementes in Abhängigkeit vom Entfaltungszustand des Gassackes erfolgt. Diese Ausführungsform zielt u. a. ab auf eine etwaige Reduzierung der Aggressivität eines Gassackes in dem Fall, daß dieser während des Entfaltungsvorganges vorzeitig auf ein Hindernis treffen sollte, also beispielsweise auf eine in einer Out-of-Position-Sitzposition sitzenden Person. Beispielsweise könnte das Steuerelement beim Auftreffen des Gassackes auf ein Hindernis so angesteuert werden, daß es von einem stabilen Rastzustand in den anderen Rastzustand überführt wird und so den Gasmassenstrom des Gasgenerators derart aufteilt, daß nun ein abgetrennter Teil, der zweite Teil des Gasmassenstromes, nicht mehr in den Gassack geleitet wird. Hierdurch könnte die Aggressivität der Gassackfront entscheidend reduziert werden.

Gemäß einer konkreten Ausführungsform wird das Steuerelement durch wenigstens ein am Gassack befestigtes Steuerband im Zeitpunkt der Straffung des Steuerbandes infolge des Entfalten des Gassackes angesteuert. Wenn das wenigstens eine Steuerband beispielsweise vorzugsweise an der frontalen Innenseite des Gassackes befestigt ist, wird sich der Gassack direkt nach Zündung des Gasgenerators zumeist ungestört ausbreiten können unter Mitnahme des frontal angebrachten Steuerbandes, welches rückwärtig beispielsweise in einer geeigneten Halterung befestigt ist. Mit zunehmender Entfaltung des Gassackes wird das Steuerband zunehmend gestreckt. Sollte die Gassackfront nun auf ein Hindernis stoßen, bevor er vollständig aufgeblasen ist, endet die weitere Streckung des Steuerbandes. Kann sich dagegen der Gassack ungehindert ausbreiten, kann das Steuerband beispielsweise nach einer vorgegebenen Entfaltungsstrecke des Gassackes beispielsweise reißen und so beispielsweise eine Überführung des Steuerelementes von einem stabilen Rastzustand in den wenigstens anderen stabilen Rastzustand bewirken. Hierdurch kann dann der Gasmassenstrom bedarfsgerecht in Teilströme aufgeteilt werden und entweder vollständig oder nur teilweise in den Gassack geleitet werden.

Wie schon erwähnt kann bevorzugt vorgesehen sein, daß das wenigstens eine Steuerband nach Betätigung des Steuerelementes aus einer rückwärtigen Fixierung aufgrund der in ihm wirkenden Zugkräfte ausklinkt.

Eine weitere, sehr vorteilhafte Möglichkeit der Ansteuerung des Steuerelementes weist eine Ausführungsform des Airbagmoduls auf, bei dem die polystabile Feder einseitig oder beidseitig in Bezug auf die dem Gassack zu- bzw. abgewandte Kippfederseite mit einer Schicht aus einem piezoelektrischen Werkstoff versehen ist, wobei durch Anlegen einer entsprechenden elektrischen Spannung ein Wechsel der Kippfeder zwischen mindestens zwei stabilen Rastzuständen erfolgen kann. Im Gegensatz zu einer Ansteuerung mit Hilfe von Steuerbändern, bei der prinzipbedingt jedes Steuerband exakt eine Umschaltung vornehmen kann, ist bei der in der oben beschriebenen Art beschichteten Kippfeder ein mehrfaches Umschalten bzw. Ansteuern möglich, beispielsweise in Abhängigkeit von Parametern wie einer sensierten Out-of-Position-Sitzposition. Durch Anlegen einer elektrischen Spannung wird eine Verformung der aus einem piezoelektrischen Werkstoff bestehenden Schicht bzw. Schichten realisiert und somit indirekt eine beliebige Ansteuerung des Steuerelementes "Kippfeder" möglich. Diese Art der Ansteuerung des Steuerelementes erlaubt eine den jeweiligen Anforderungen entsprechende Regelsträtegie bei der Aufteilung des Gasmassenstromes. Die Kippfeder kann einseitig oder beidseitig beschichtet werden, wobei bei einer einseitigen Beschichtung, die dem Gassack abgewandte Kippfederseite zu bevorzugen ist, da in diesem Fall der piezoelektrische Werkstoff in geringerem Maße dem unter Umständen heißen Gasstroms ausgesetzt ist. Die beidseitige Beschichtung der Kippfeder erlaubt eine größere Krafteinwirkung auf diese. In Abhängigkeit der Federsteifigkeit und der einleitbaren Kräfte der Kippfeder ist sogar eine stufenlose Ansteuerung der Kippfeder denkbar.

Auch bei dieser Ausführungsform lassen sich die Merkmale entsprechend den Ansprüchen 2 und 4 bis 7 bis realisieren, die eingangs der Beschreibung im Detail erläutert wurden, und auf die aus diesem Grunde hier nicht mehr explizit eingegangen werden soll.

In konkreter Anwendung kann gemäß einer vorteilhaften Weiterbildung vorgesehen sein, daß die Ansteuerung des Steuerelementes derart erfolgt, daß nach dem Öffnen der es abdeckenden Modulkappe und einer Entfaltung des Gassackes derart, daß sich die Gassackfront bis zu etwa 20 cm fortbewegt, ein erheblicher Teil des Gasmassenstromes als zweiter Teilstrom in den zweiten Teil des Modulgehäuses umgeleitet wird, und daß in einer weiteren Phase unter der Voraussetzung, daß sich die Gassackfront weiter als etwa 20 cm ausbreitet, der größte Teil des Gasmassenstromes in den ersten Teil des Modulgehäuses und von dort in den Gassack geleitet wird. Konkret bedeutet dies, daß zunächst der Gassack mit reduziertem Gasmassenstrom aufgeblasen wird und der größere oder erheblichere Teil des Gesamtgasmassenstromes als zweiter Teilstrom in den zweiten Teil des Modulgehäuses umgeleitet wird. Wenn sich nun die Gassackfront weiter als beispielsweise 20 cm ausbreitet, erfolgt die Umschaltung des Steuerelementes derart, daß nun der größere Teil des Gesamtgasmassenstromes in den ersten Teil des Modulgehäuses und von dort weiter in den Gassack geleitet wird. Dies beruht auf der Annahme, daß in Falle der Ausbreitung der Gassackfront weiter als ca. 20 cm kein klassischer Out-of-Position-Fall vorliegt, d. h. sich kein Hindernis im anfänglichen Entfaltungsweg des Gassackes befindet.

Diese Art der Ansteuerung kann auch dadurch modifiziert werden, daß vor dem Öffnen der es abdeckenden Modulkappe der größte Teil des Gasmassenstromes in den ersten Teil des Modulgehäuses geleitet wird. Der Hintergrund dieses Lösungsvorschlages ist der folgende:
besitzt ein Airbagmodul kein automatisches Modulkappenöffnungssystem, wie beispielsweise ein pyrotechnisches System, was in aller Regel der Fall ist, wird zum Öffnen der Modulabdeckkappe ein relativ hoher Airbaginnendruck benötigt. Dies bedeutet, um die Kappe in akzeptabler Zeit öffnen zu können, daß der gesamte Anfangsmassenstrom des Gasgenerators für die Einleitung in den Gassack benötigt wird. Direkt nach dem Öffnen der Modulkappe wird das Steuerelement in beschriebener Art und Weise angesteuert, so daß dann ein erheblicher Teil des Gasmassenstromes in den zweiten Teil des Modulgehäuses umgeleitet wird, also der Gassack mit nur reduziertem Gasmassenstrom aufgeblasen wird, bis sich die Gassackfront um bis zu etwa 20 cm fortbewegt hat.

Die Ansteuerung des Steuerelementes kann zusätzlich alternativ derart erfolgen, daß vor dem Öffnen der es abdeckenden Modulkappe der größte Teil des Gasmassenstromes in den zweiten Teil des Modulgehäuses geleitet wird. Durch den so entstehenden hohen Druck im zweiten Teil des Modulgehäuses wird eine Bewegung der entsprechenden Modulgehäuseteile hervorgerufen, wodurch die Modulkappe aufreißt und nach hinten in das Armaturenbrett des Fahrzeugs gezogen wird.

Die Erfindung wird anhand einiger Ausführungsbeispiele näher erläutert. Hierbei zeigt:
- Figur 1: schematisch ein Airbagmodul mit einem Gasmassenstrom in den Gassack hinein mit einem Steuerelement in dem ersten stabilen Rastzustand (a) und mit einem Gasmassenstrom, der vom Gassack weggelenkt wird, mit einem Steuerelement im zweiten stabilen Rastzustand (b),
- Figur 2: die Aufsicht auf ein Verteilerelement in Form einer Kippfeder,
- Figur 3: drei verschiedene Ausführungsformen (a, b, c), mit unterschiedlich ausgebildeten mechanischen Steuerelementen, jeweils links in einem stabilen Rastzustand und rechts im jeweiligen anderen stabilen Rastzustand,
- Figur 4: Schematisch ein Airbagmodul mit einem weiteren mechanischen Steuerelement in drei verschiedenen Rastzuständen; vorgeformte Ausgangsstellung (a), ausgelenkte Mittelstellung (b), voll ausgelenkte Endstellung (c),
- Figur 5: schematisch die Ausbreitung eines Gassackes nach Zündung des Moduls in zeitlicher Abfolge bei ungehinderter Entfaltung (a, b, c) und im Out-of-Position-Fall (a, b, d), und
- Figur 6: die Ausbildung des Airbagmoduls mit Ausnutzung des umgelenkten Teilmassenstromes zum Fortbewegen von Modulkappenteilen aus dem Entfaltungsbereich des Gassackes.

Nachfolgend bezeichnen gleiche Bezugszeichen dieselben Teile.

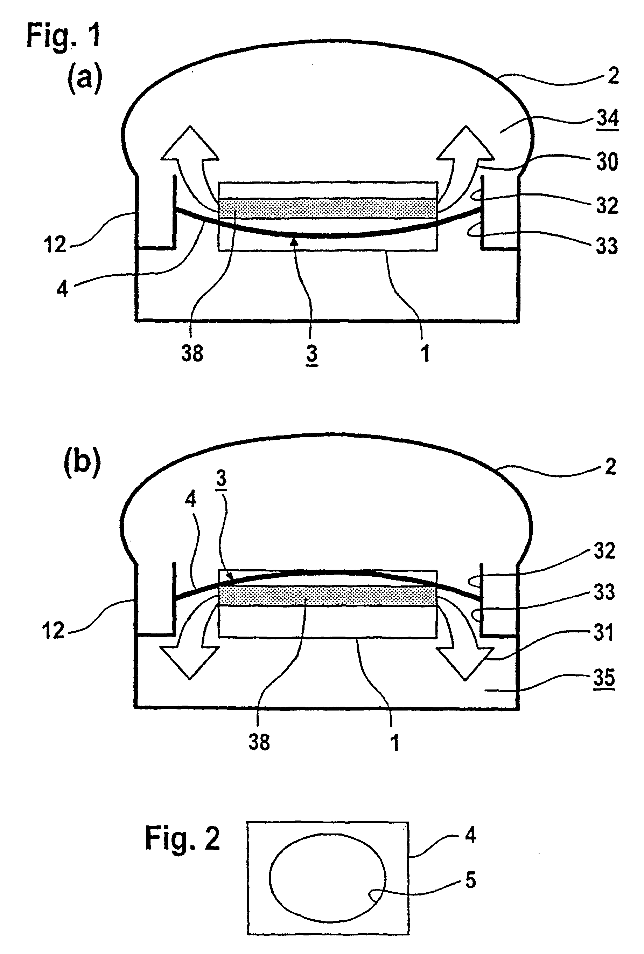

In Fig. 1 ist das erfindungsgemäße Airbagmodul in zwei Schaltzuständen des Steuerelementes 3 schematisch dargestellt.

Ganz allgemein weist das Airbagmodul ein mehrteiliges Modulgehäuse 12 auf, in dessen Inneren ein Gasgenerator 1 angeordnet ist. Beim Gasgenerator 1 ist der Bereich des Gasauslasses 38 zur Anschauung farblich abgesetzt. Bei der dargestellten Anordnung werden eine erste Kammer 34 und eine zweite Kammer 35 voneinander separiert. Das Steuerelement 3 nimmt hier die Funktion wahr, die Kammern 34 und 35 voneinander zu trennen. Die erste Kammer 34 ist vorliegend gebildet aus der Oberseite des Verteilerelementes 4, einem ersten Teil 32 des Modulgehäuses 12 sowie einem dem Gasgenerator 1 zugeordneten Gassack 2.

Die zweite Kammer 35 wird ausgebildet aus der Unterseite des Verteilerelementes 4 und dem zweiten Teil 33 des Modulgehäuses 12.

Im ersten stabilen Rastzustand des Verteilerelementes 4 (Fig. 1a) wird ein erster Teilstrom 30 des Gasmassenstromes vom Gasgenerator 1 in die erste Kammer 34 geleitet, d. h., der Gassack 2 wird mit Gas befüllt.

Im zweiten stabilen Rastzustand des Verteilerelementes 4 (Fig. 1b) hingegen lenkt das Verteilerelement 4 den Gasstrom so um, daß ein zweiter Teilstrom des Gasmassenstromes in die zweite Kammer geleitet wird.

Durch die gezielte Ansteuerbarkeit des Steuerelementes 3 bzw. Verteilerelementes 4 lassen sich eine Vielzahl von speziellen Funktionen und zeitlichen Abläufen nach der Zündung des Airbagmoduls gestalten, wie anhand der weiteren Ausführungen deutlich gemacht wird.

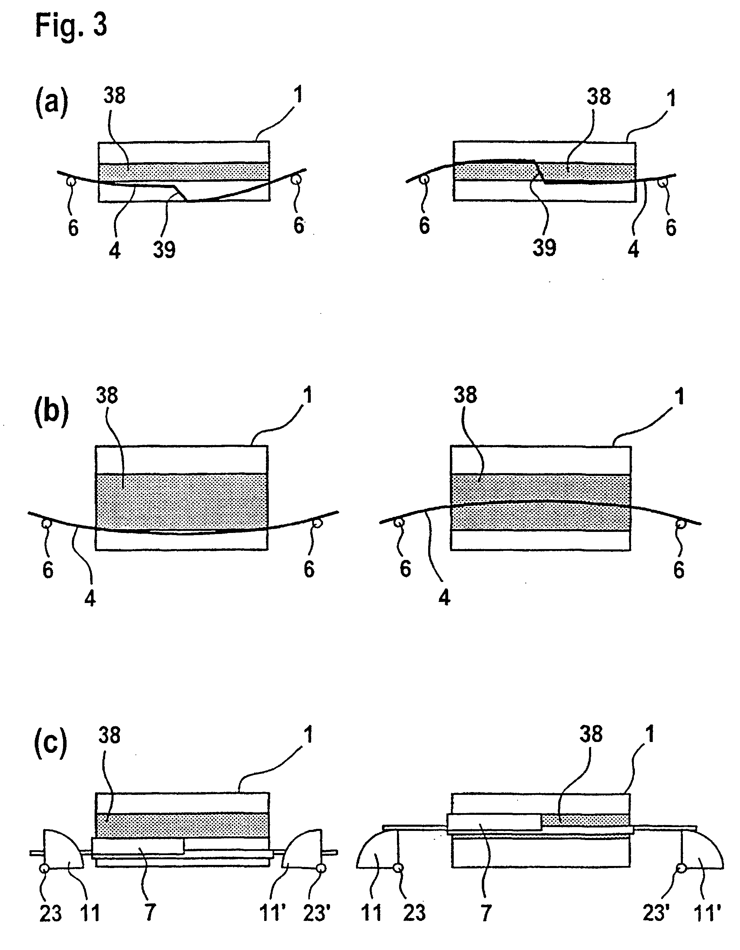

Fig. 2 zeigt schematisch die Aufsicht auf das Verteilerelement 4, vorliegend in Ausbildung einer Kippfeder 4 mit einer zentralen Durchbrechung 5. Diese Kippfeder 4 kann vorgespannt, d. h. vorgebogen über einen topfförmigen Gasgenerator herkömmlicher Bauart gesetzt werden, der dann durch die Durchbrechung 5 hindurch greift. Die Kippfeder 4 kann in diesem Zustand im Modul befestigt werden und würde etwa die Lage gemäß Fig. 1a einnehmen. Durch Einleitung entsprechender Ansteuerungskräfte kann die Kippfeder 4 gezielt in ihren anderen stabilen Rastzustand gebracht werden, wie er in Fig. 1b schematisch dargestellt ist. In diesem Fall würde die Kippfeder 4 den Bereich des Gasauslasses 38 des Gasgenerators 1 vollständig gegenüber dem Gassack abschirmen und den Gasmassenstrom in die der Entfaltungsrichtung des Gassackes 2 entgegengesetzte Richtung leiten, also in die zweite Kammer 35 in Fig. 1b.

In Fig. 3 sind verschiedene Möglichkeiten zur Ausbildung des Verteilerelementes 4 dargestellt, und zwar im linken Bereich in einem ersten stabilen Rastzustand und im rechten Bereich im zweiten stabilen Rastzustand.

In Fig. 3a ist ein Verteilerelement 4 mit einer schrägen Trennfläche 39 oder Sicke dargestellt, und zwar gelagert in Lagern 6, die um einen Gasgenerator 1 herum angeordnet sind. Im linken Bereich würde der gesamte Gasmassenstrom aus dem Gasauslaß 38 nach oben strömen. Beim Überführen des Verteilerelementes 4 in den anderen stabilen Rastzustand wird gemäß der rechten Abbildung ein Teil des Gasstromes aufgrund der Ausbildung der Sicke 39 weiterhin nach oben abgeleitet, ein anderer Teil jedoch nach unten.

Gemäß Fig. 3b ist eine ähnliche Anordnung dargestellt, jedoch mit einem Gasgenerator 1 mit einem breiteren Gasauslaß 38, welcher nur zum Teil von einem Verteilerelement 4 nach Überführung in den zweiten Rastzustand (rechts) abgedeckt wird, so daß ein erster Teilstrom aus dem Gasauslaß 38 nach oben entweicht, während ein anderer Teil nach unten abgelenkt wird.

Eine andere Ausführungsform des Verteilerelementes 7 ist in Fig. 3c dargestellt. Das Verteilerelement 7 ist vorliegend eine etwa zur Hälfte über den Gasauslaßbereich 38 des Gasgenerators 1 schiebbare Hülse, die - betätigt über in Lagern 23 und 23' gelagerte Umlenkhebel 11 und 11' - von einem Rastzustand in den anderen Rastzustand überführt werden kann. Wie in Fig. 3c dargestellt, wird der Gasauslaß 38 in etwa zur Hälfte abgedeckt und der entsprechende Teilmassenstrom nach unten umgeleitet, wo hingegen im ersten Rastzustand links in Fig. 3 c der gesamte Gasmassenstrom nach oben entweichen kann.

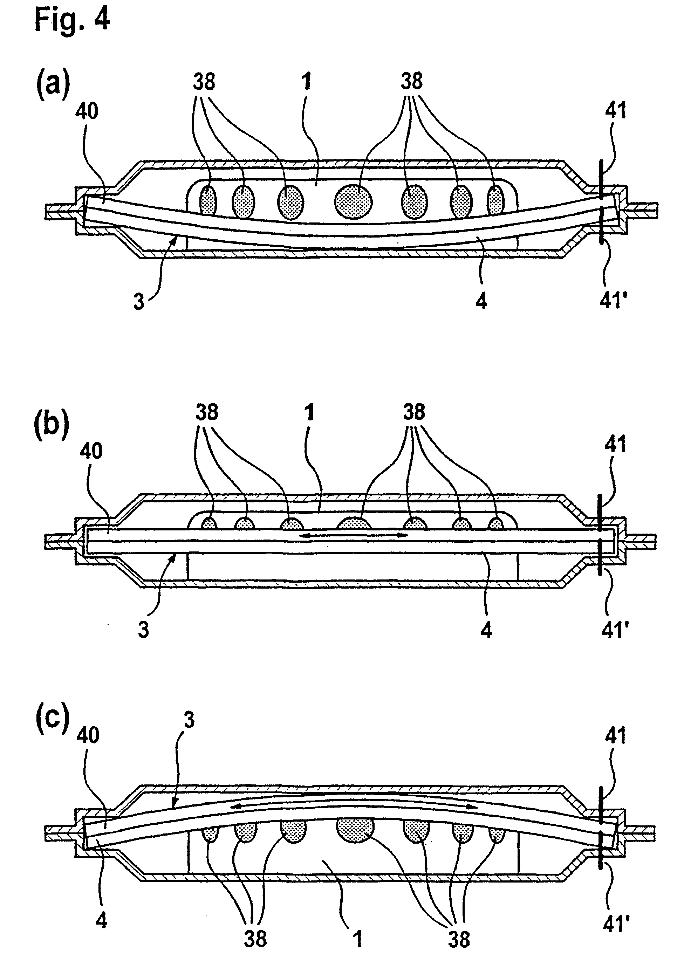

In Fig. 4 ist eine weitere Ausführungsform des Airbagmoduls dargestellt. Bei dieser Ausführungsform besteht das Steuerelement (3) aus einer polystabilen Kippfeder (4), die einseitig, im vorliegenden Fall auf der dem Gassack zugewandten Kippfederseite mit einer Schicht aus einem piezoelektrischen Werkstoff (40) versehen ist. Es werden drei verschiedene Stellung des Steuerelementes gezeigt, die die Funktionsweise dieses Steuerelementes veranschaulichen (Fig. 4a,b und c).

Fig. 4a zeigt das Airbagmodul mit dem in der vorgeformten Ausgangsstellung positionierten Steuerelement (3). Bei dem so angeordneten Steuerelement (3) wird der überwiegende Teil des Gasmassenstromes, der den Gasgenerator (1) über die im vorliegenden Fall unmittelbar als Gasauslaß (38) dienenden Ausströmöffnungen des Gasgenerators (1) verläßt, als erster Teilstrom in Richtung des Gassackes gelenkt.

In Fig. 4b wird das Airbagmodul mit in der ausgelenkten Mittelstellung positionierten Steuerelement (3) gezeigt. Erreicht wird dies durch Anlegen einer elektrischen Spannung an die elektrischen Anschlüsse (41, 41'), wodurch sich die Schicht aus piezoelektrischem Werkstoff (40) ausdehnt, in die Mittellage drängt und dabei die mit ihr fest verbundene Kippfeder (4) mitnimmt. Die Ausdehnung bzw. Ausdehnungsrichtung der Schicht ist in Figur 4b durch einen Pfeil veranschaulicht.

Fig. 4c zeigt das Airbagmodul mit dem in der vollausgelenkten Endstellung positinonierten Steuerelement (3). Realisiert wird diese vollausgelenkte Endstellung des Steuerelementes (3) durch eine weitere Ausdehnung der Schicht aus piezoelektrischen Werkstoffen (40). Unter Berücksichtigung des Zusammenhanges von Verformung und angelegter Spannung bei piezoelektrischen Werkstoffen wird dies durch Erhöhung der über die elektrischen Anschlüsse (41, 41') angelegten elektrischen Spannung erreicht. Der den Gasgenerator (1) über den Gasauslaß (38) verlassende Gasmassenstrom wird zum größten Teil als zweiter Teilstrom in den zweiten Teil des Modulgehäuses umgeleitet. Entsprechend gering ist der erste Teilstrom, der zur Füllung des Gassackes dient. Die Ausdehnung bzw. Ausdehungsrichtung des piezoelektrischen Werkstoffes ist analog zu Fig. 4b durch einen Pfeil veranschaulicht. Die Pfeillänge verdeutlicht die über die in der Mittellage erreichte Verformung hinausgehende Ausdehnung des piezoelektrischen Werkstoffes.

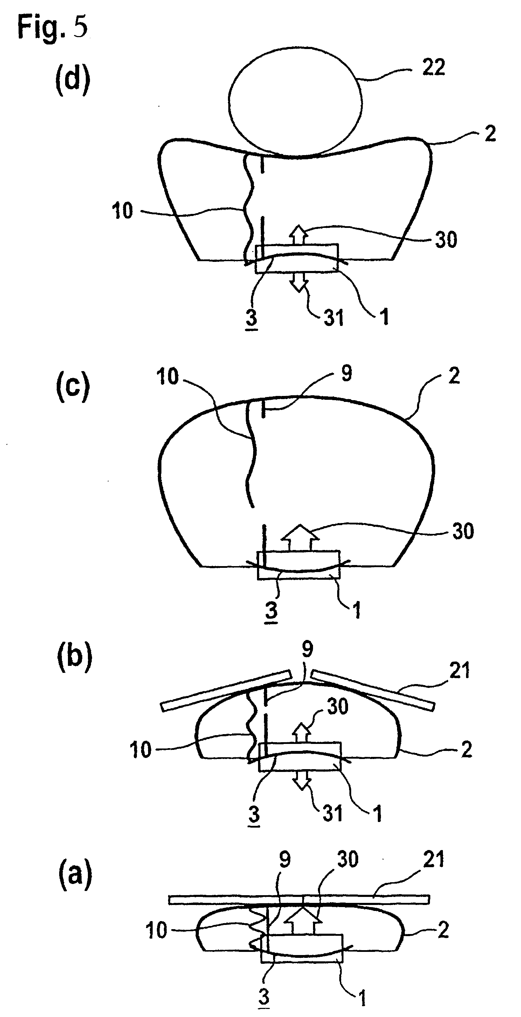

Fig. 5 zeigt nun schematisch die Ausbreitung eines Gassackes 2 nach Zündung des Airbagmoduls in zeitlicher Abfolge, und zwar einmal im Falle ungehinderter Entfaltung (Fig. 5a, b, c) und im Out-of-Position-Fall (Fig. 5a, b, d).

Vorliegend wird bei Zündung des Gasgenerators 1 (Fig. 5a) ein erster Teilstrom 30 des Gasmassenstromes vom Gasgenerator 1 aufgrund der Einnahme des ersten stabilen Rastzustandes des Steuerelementes 3 in den Gassack 2 geleitet. Der Gassack 2 ist dabei zunächst durch eine Abdeckkappe 21 gegenüber dem Kraftfahrzeuginneren geschützt.

Mit der frontalen Innenseite des Gassackes sind zwei Bänder 9 und 10 verbunden, wobei das erste Band 9 kürzer ist als das zweite Band 10, wie dies schematisch in Fig. 5a angedeutet ist. Direkt nach der Zündung (Fig. 5a) des Moduls leitet der Gasgenerator 1 Gas in den einzigen Gassack 2 ein, der die Modulkappe 21 bei seiner Entfaltung aufbricht und zur Seite schiebt (Fig. 5b). In diesem Moment ist das erste Band 9 gespannt und leitet Zugkräfte in das Steuerelement 3 ein, welches daraufhin vom ersten stabilen Rastzustand, wie in Fig. 5a darstellt, überführt wird in den zweiten stabilen Rastzustand, wie er in Fig. 5b dargestellt ist. Dies führt zu einer Umlenkung eines zweiten Teilstromes 31 fort von dem Gassack 2, so daß nur noch ein erster Teilstrom 30 zur weiteren Befüllung des Gassackes 2 mit Gas zur Verfügung steht. Das Band 9 reißt und der Gassack 2 wird also mit einem etwas geringerem Teilstrom des Gasmassenstromes befüllt. Die weitere Entwicklung hängt davon ab, ob sich der Gassack 2 weiterhin ungehindert entfalten kann oder auf ein Hindernis stößt.

In Fig. 5c ist der Fall der ungehinderten Entfaltung des Gassackes 2 dargestellt. Nach weiterer Entfaltung aus dem Zustand in Fig. 5b, wird auch das längere Band 10 gestreckt, so daß es Zugkräfte auf das Steuerelement 3 ausüben kann, welche das Steuerelement 3 wieder in den ersten stabilen Rastzustand zurückschaltet, so daß der gesamte Gasmassenstrom als erster Teilstrom 30 gesamthaft zur Befüllung des Gassackes 2 zur Verfügung steht.

Stößt hingegen der sich entfaltende Gassack 2 auf ein Hindernis 22 (Fig. 5d), kommt es nicht zur Streckung des Bandes 10 und somit auch nicht zur erneuten Umschaltung des Steuerelementes 3, so daß es bei der weiteren Befüllung des Gassackes 2 mit einem ersten Teilstrom 30 und einem weiteren Umlenken eines zweiten Teilstromes 31 verbleibt.

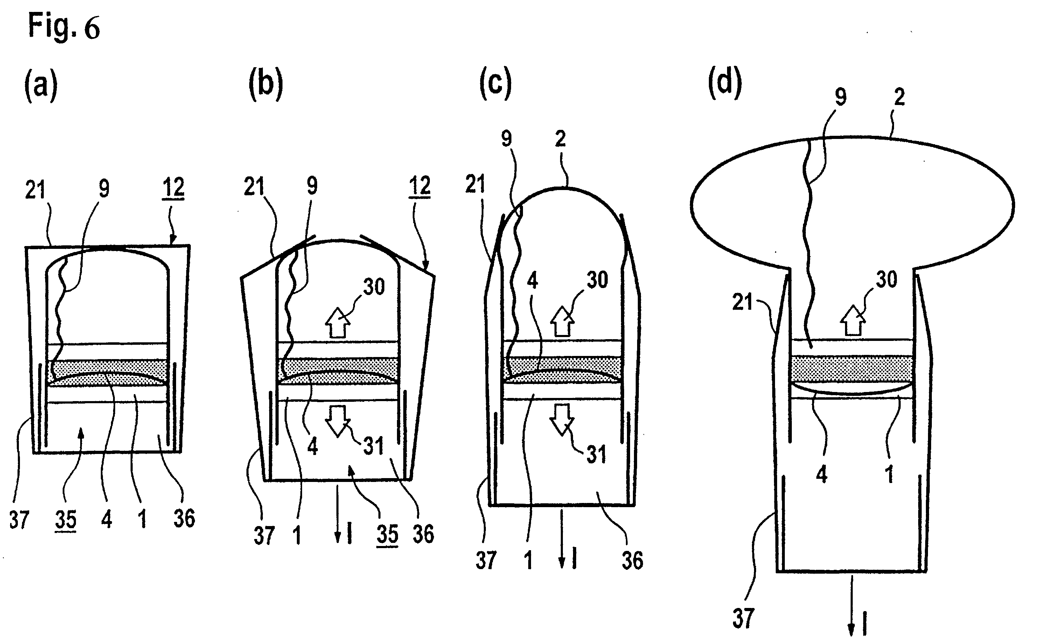

In Fig. 6 ist nun eine spezielle Ausbildung des Airbagmoduls dargestellt, und zwar in zeitlicher Abfolge von (a) bis (d) nach Zündung des Airbagmoduls.

Diese Ausführungsform macht sich zunutze, daß ein Teilstrom 31 des Gasmassenstromes in eine zweite Kammer 33 des Modulgehäuses 12 geleitet wird, die vorliegend als Druckkammer 36 ausgebildet ist. Im Inneren des Moduls ist ein Gasgenerator 1 angeordnet, der in einen Gassack Gas einleiten kann, welcher an seiner frontalen Innenseite mit einem Steuerband 9 versehen ist. Im Ruhezustand ist das Airbagmodul abgedeckt durch eine Abdeckung oder Modulkappe 21.

Direkt nach Zündung des Gasgenerators 1 strömt zumindest ein erster Teilstrom 30 in den Gassack (Fig. 6b), wohingegen der zweite Teilstrom 31 in die rückseitig ausgebildete Druckkammer 36 im zweiten Teil 33 des Modulgehäuses 12 strömt. In der Druckkammer 36 wird demnach ein Druck aufgebaut, der zu einer Ausweichbewegung von bewegbaren Teilen 37 des Modulgehäuses 12 in Richtung des angedeuteten Pfeiles I führt. Die bewegten Teile 37 des Modulgehäuses 12 sind mit der Abdeckung oder Modulkappe 21 verbunden, so daß eine Bewegung der bewegten Teile 37 zwangsläufig zu einer Bewegung der Modulkappe 21 führt, wie in Fig. 6b und 6c durch ein Aufschwenken der Modulkappe 21 schematisch dargestellt ist. In der Realität könnte die Modulkappe 21 aufgrund der schon erwähnten Ausgleichsbewegung der bewegten Teile 37 in das Armaturenbrett des Fahrzeugs gezogen werden.

Im weiteren Verlauf wird der Gassack 2 weiter mit dem Teilstrom 30 befüllt, während die Druckkammer 36 weiterhin durch den Teilstrom 31 gefüllt wird (Fig. 6c).

Das Steuerband 9 wird durch die Entfaltungsbewegung des Gassackes 2 gestreckt, wodurch in der schon weiter oben beschriebenen Art und Weise ein Umschalten des Verteilerelementes 4 in den zweiten stabilen Rastzustand erfolgt. Dies führt zu einem Umlenken des Gasmassenstromes so, daß der Gesamtgasmassenstrom als Teilstrom 30 im vorliegenden Falle dem Gassack 2 zugeführt wird, wohingegen der zweite Teilstrom 31 praktisch verschwindet. Hierdurch wird der Gassack 2 innerhalb kürzester Zeit auf volle Größe aufgeblasen. Das Steuerband 9 hat nach dem Umschalten seine Funktion erfüllt und klinkt beispielsweise aus einer geeigneten Halterung im Bereich des Verteilerelementes 4 aus. Diese Situation ist in Fig. 6d dargestellt.

Wäre beispielsweise der Gassack in der Position nach Fig. 6c auf ein Hindernis gestoßen, würde ein Umschalten durch das Steuerband 9 nicht stattfinden können, so daß das Verteilerelement 4 in der ersten stabilen Rastlage verharren würde und der Gassack 2 nicht mit voller Stärke aufgeblasen würde. In diesem Falle läge aber auch ein Out-of-Position-Fall vor, so daß die erzielte Reduzierung der Aggressivität der Gassackfront erwünscht und mit der speziellen Ausführungsform nach Fig. 6 auch möglich ist.

### Bezugszeichenliste

- 1: Gasgenerator
- 2: Gassack
- 3: Steuerelement
- 4: Kippfeder
- 5: Durchbrechung
- 6: Lager für 4
- 7: Hülse
- 9: erstes Band
- 10: zweites Band
- 11: Umlenkhebel
- 11': Umlenkhebel
- 12: Modulgehäuse
- 21: Modulkappe, Abdeckung
- 22: Hindernis
- 23: separates Lager für 11
- 23': separates Lager für 11
- 30: erster Teilstrom
- 31: zweiter Teilstrom
- 32: erster Teil von 12
- 33: zweiter Teil von 12
- 34: erste Kammer
- 35: zweite Kammer
- 36: Druckkammer
- 37: bewegte Teile von 12
- 38: Gasauslaß
- 39: schräge Trennfläche
- 40: Schicht aus einem piezoelektrischen Werkstoff
- 41: Elektrischer Anschluß
- 41': Elektrischer Anschluß

## Patentansprüche

1. Airbagmodul, aufweisend wenigstens einen in einem aus mehreren Teilen bestehenden Modulgehäuse (12) angeordneten Gasgenerator (1), der auf ein Auslösesignal hin einen Gasmassenstrom erzeugt, der durch ein Steuerelement (3) gesteuert in zwei Teilströme aufteilbar ist, wobei der erste Teilstrom (30) des Gasmassenstromes in einen ersten Teil (32) des Modulgehäuses (12) und der zweite Teilstrom (31) des Gasmassenstromes in einen zweiten Teil (33) des Modulgehäuses (12) einleitbar ist, bei dem das Steuerelement (3) aus einem mechanischen Verteilerelement (4) besteht, das über den Gasauslaß des Gasgenerators (1) verschieblich geführt ist und wenigstens zwei stabile Rastzustände einnehmen kann, wobei der erste Teilstrom (30) des Gasmassenstromes in eine erste Kammer (34) einströmt, die gebildet ist aus einer ersten Seite des Verteilerelementes (4), dem ersten Teil (32) des Modulgehäuses (12) sowie einem dem Gasgenerator (1) zugeordneten Gassack (2), und der zweite Teilstrom (31) des Gasmassenstromes in eine zweite Kammer (35) einströmt, die gebildet ist aus einer zweiten Seite des Verteilerelementes (4) und dem zweiten Teil (33) des Modulgehäuses (12),
**dadurch gekennzeichnet, daß**
das Steuerelement (3) gebildet ist durch eine polystabile Kippfeder (4) mit einer Durchbrechung (5), durch die hindurch der Gasgenerator (1) beim Wechsel von einem zu anderen stabilen Rastzustand der Kippfeder (4) greift.

2. Airbagmodul nach Anspruch 1, bei dem die Ausströmöffnungen des Gasgenerators (1) unmittelbar als Gasauslass dienen.

3. Airbagmodul nach Anspruch 1 oder 2, bei dem die polystabile Kippfeder (4) eine stufenförmige bzw. bezüglich der Längsachse des Modulgehäuses (12) schräge Trennfläche (39) für den Gasmassenstrom ausbildet.

4. Airbagmodul nach einem der Ansprüche 1 bis 3, bei dem der zweite Teil (33) des Modulgehäuses (12) eine Gasausströmöffnung hin zum Fahrzeug-Innenraum aufweist.

5. Airbagmodul nach einem der Ansprüche 1 bis 4, bei dem der zweite Teil (33) des Modulgehäuses (12) über eine Druckkammer (36) verfügt, in welche der zweite Teilstrom (31) des Gasmassenstromes einleitbar ist, der darin einen Gasdruck aufbaut, welcher zu einer Reaktionsbewegung von Teilen (37) des Modulgehäuses (12) führt.

6. Airbagmodul nach Anspruch 9, bei dem die bewegten Teile (37) des Modulgehäuses (12) mit einer Abdeckung (21) des Airbagmoduls im Armaturenbrett eines Fahrzeugs verbunden sind, derart, daß die Reaktionsbewegung der Teile (37) des Modulgehäuses (12) zu einer Bewegung der Abdeckung (21) in das Armaturenbrett hinein führt.

7. Airbagmodul nach einem der Ansprüche 1 bis 6, bei dem die Ansteuerung der Kippfeder (4) in Abhängigkeit vom Entfaltungszustand des Gassackes (2) erfolgt.

8. Airbagmodul nach Anspruch 7, bei dem die Kippfeder (4) durch wenigstens ein am Gassack (2) befestigtes Steuerband (9) angesteuert wird im Zeitpunkt der Straffung des Steuerbandes (9) infolge des Entfaltens des Gassackes (2).

9. Airbagmodul nach Anspruch 8, bei dem das wenigstens eine Steuerband (9) an der frontalen Innenseite des Gassackes (2) befestigt ist.

10. Airbagmodul nach Anspruch 8 oder 9, bei dem das wenigstens eine Steuerband (9) nach Betätigung der Kippfeder (4) reißt.

11. Airbagmodul nach Anspruch 8 oder 9, bei dem das wenigstens eine Steuerband (9) nach Betätigung des Steuerelements (3) aus einer rückwärtigen Fixierung aufgrund der in ihm wirkenden Zugkräfte ausklinkt.

12. Airbagmodul nach einem der Ansprüche 1 bis 11, bei dem die polystabile Kippfeder (4) einseitig oder beidseitig in bezug auf die dem Gassack (2) zu- bzw. abgewandte Kippfederseite mit einer Schicht aus einem piezoelektrischen Werkstoff (40) versehen ist, wobei durch Anlegen einer entsprechenden elektrischen Spannung ein Wechsel der Kippfeder (4) zwischen mindestens zwei stabilen Rastzuständen erfolgt.

13. Airbagmodul nach Anspruch 14, bei dem die Ausströmöffnungen des Gasgenerators (1) unmittelbar als Gasauslaß dienen.

14. Airbagmodul nach Anspruch 12 oder 13, bei dem der zweite Teil (33) des Modulgehäuses (12) eine Gasauslaßöffnung hin zum Fahrzeuginnenraum aufweist.

15. Airbagmodul nach einem der Ansprüche 12 bis 14, bei dem der zweite Teil (33) des Modulgehäuses (12) über eine Druckkammer (36) verfügt, in welche der zweite Teilstrom (31) des Gasmassenstromes einleitbar ist, der darin einen Gasdruck aufbaut, welcher zu einer Reaktionsbewegung von Teilen (37) des Modulgehäuses (12) führt.

16. Airbagmodul nach Anspruch 15, bei dem die bewegten Teile (37) des Modulgehäuses (12) mit einer Abdeckung (21) des Airbagmoduls im Armaturenbrett eines Fahrzeuges verbunden sind, derart, daß die Reaktionsbewegung der Teile (37) des Modulgehäuses (12) zu einer Bewegung der Abdeckung (21) in das Armaturenbrett hinein führt.

17. Airbagmodul nach einem der Ansprüche 12 bis 16, bei dem die Ansteuerung des Steuerelementes (3) in Abhängigkeit vom Entfaltungszustand des Gassackes (2) erfolgt.

18. Airbagmodul nach einem der Ansprüche 1 bis 17, bei dem die Ansteuerung der Kippfeder (4) derart erfolgt, daß nach dem Öffnen der es abdeckenden Modulkappe (21) und einer Entfaltung des Gassackes (2) derart, daß sich die Gassackfront bis zu etwa 20 cm fortbewegt, ein erheblicher Teil des Gasmassenstromes als zweiter Teilstrom (31) in den zweiten Teil (33) des Modulgehäuses (12) umgeleitet wird, und daß in einer weiteren Phase unter der Voraussetzung, daß sich die Gassackfront weiter als etwa 20 cm ausbreitet, der größte Teil des Gasmassenstromes in den ersten Teil (32) des Modulgehäuses (12) und von dort in den Gassack (2) geleitet wird.

19. Airbagmodul nach Anspruch 18, bei dem die Ansteuerung der Kippfeder (4) zusätzlich derart erfolgt, daß vor dem Öffnen der es abdeckenden Modulkappe (21) der größte Teil des Gasmassenstromes in den ersten Teil (32) des Modulgehäuses (12) geleitet wird.

20. Airbagmodul nach Anspruch 18, bei dem die Ansteuerung der Kippfeder (4) zusätzlich derart erfolgt, daß vor dem Öffnen der es abdeckenden Modulkappe (21) der größte Teil des Gasmassenstromes in den zweiten Teil (33) des Modulgehäuses (12) geleitet wird.

## Claims

1. Airbag module having at least one gas generator (1) arranged in a module housing (12) consisting of several parts, and which produces on a trigger signal a gas mass stream which can be divided into two part streams in controlled manner by a control element (3), wherein the first part stream (30) of the gas mass stream can be introduced into a first part (32) of the module housing (12) and the second part stream (31) of the gas mass stream into a second part (33) of the module housing (12), in which the control element (3) consists of a mechanical distributor element (4) which is guided displaceably via the gas outlet of the gas generator (1) and may occupy at least two stable locking states, wherein the first part stream (30) of the gas mass stream flows into a first chamber (34) which is formed from a first side of the distributor element (4), the first part (32) of the module housing (12) and a gas bag (2) assigned to the gas generator (1), and the second part stream (31) of the gas mass stream flows into a second chamber (35) which is formed from a second side of the distributor element (4) and the second part (33) of the module housing (12), **characterised in that** the control element (3) is formed by a polystable tilting spring (4) with a perforation (5), through which the gas generator (1) engages when changing from one to the other stable locking state of the tilting spring (4).

2. Airbag module according to claim 1, in which the outflow openings of the gas generator (1) serve directly as a gas outlet.

3. Airbag module according to claim 1 or 2, in which the polystable tilting spring (4) forms a step-like separating surface (39) or one which is inclined with respect to the longitudinal axis of the module housing (12) for the gas mass stream.

4. Airbag module according to one of claims 1 to 3, in which the second part (33) of the module housing (12) has a gas outflow opening towards the vehicle interior.

5. Airbag module according to one of claims 1 to 4, in which the second part (33) of the module housing (12) has a pressure chamber (36), into which the second part stream (31) of the gas mass stream can be introduced, which builds up a gas pressure therein which leads to a reaction movement of parts (37) of the module housing (12).

6. Airbag module according to claim 9, in which the moved parts (37) of the module housing (12) are connected to a cover (21) of the airbag module in the dashboard of a vehicle such that the reaction movement of the parts (37) of the module housing (12) leads to a movement of the cover (21) into the dashboard.

7. Airbag module according to one of claims 1 to 6, in which control of the tilting spring (4) is effected as a function of the unfolding state of the gas bag (2).

8. Airbag module according to claim 7, in which the tilting spring (4) is controlled by at least one control tape (9) attached to the gas bag (2) at the point in time of the tightening of the control tape (9) due to unfolding of the gas bag (2).

9. Airbag module according to claim 8, in which the at least one control tape (9) is attached to the frontal inner side of the gas bag (2).

10. Airbag module according to claim 8 or 9, in which the at least one control tape (9) tears after actuating the tilting spring (4).

11. Airbag module according to claim 8 or 9, in which the at least one control tape (9) releases after actuating the control element (3) from a rear fixing due to the tensile forces acting in it.

12. Airbag module according to one of claims 1 to 11, in which the polystable tilting spring (4) is provided with a layer of a piezoelectric material (40) on one side or both sides with regard to the side of the tilting spring facing or facing away from the gas bag (2), wherein a change in the tilting spring (4) is effected between at least two stable locking states by applying an appropriate electrical voltage.

13. Airbag module according to claim 14, in which the outflow openings of the gas generator (1) serve directly as a gas outlet.

14. Airbag module according to claim 12 or 13, in which the second part (33) of the module housing (12) has a gas outlet opening towards the vehicle interior.

15. Airbag module according to one of claims 12 to 14, in which the second part (33) of the module housing (12) has a pressure chamber (36), into which the second part stream (31) of the gas mass stream can be introduced, which builds up a gas pressure therein which leads to a reaction movement of parts (37) of the module housing (12).

16. Airbag module according to claim 15, in which the moved parts (37) of the module housing (12) are connected to a cover (21) of the airbag module in the dashboard of a vehicle such that the reaction movement of the parts (37) of the module housing (12) leads to a movement of the cover (21) into the dashboard.

17. Airbag module according to one of claims 12 to 16, in which control of the control element (3) is effected as a function of the unfolding state of the gas bag (2).

18. Airbag module according to one of claims 1 to 17, in which control of the tilting spring (4) is effected such that after opening the module cap (21) covering it and unfolding of the gas bag (2) such that the gas bag front is moved away up to about 20 cm, a considerable part of the gas mass stream is diverted as a second part stream (31) into the second part (33) of the module housing (12), and that in a further phase, assuming that the gas bag front expands more than about 20 cm, the greatest part of the gas mass stream is passed into the first part (32) of the module housing (12) and from there into the gas bag (2).

19. Airbag module according to claim 18, in which control of the tilting spring (4) is effected additionally such that before opening the module cap (21) covering it, the greatest part of the gas mass stream is passed into the first part (32) of the module housing (12).

20. Airbag module according to claim 18, in which control of the tilting spring (4) is effected additionally such that before opening the module cap (21) covering it, the greatest part of the gas mass stream is passed into the second part (33) of the module housing (12).

## Revendications

1. Module d'airbag, comprenant au moins un générateur de gaz (1) placé dans un boîtier de module (12) composé de plusieurs parties, qui génère, suite à un signal de déclenchement, un flux massique de gaz qui, commandé par un élément de commande (3), peut être partagé en deux flux partiels, le premier flux partiel (30) du flux massique de gaz pouvant être introduit dans une première partie (32) du boîtier de module (12) et le deuxième flux partiel (31) du flux massique de gaz dans une deuxième partie (33) du boîtier de module (12), dans lequel l'élément de commande (3) est composé d'un élément de distribution mécanique (4) guidé via la sortie de gaz du générateur de gaz (1) de manière à pouvoir être déplacé et pouvant prendre au moins deux positions d'enclenchement stables, le premier flux partiel (30) du flux massique de gaz affluant dans une première chambre (34) formée d'un premier côté de l'élément de distribution (4), de la première partie (32) du boîtier de module (12) ainsi que d'un coussin gonflable (2) affecté au générateur de gaz (1) et le deuxième flux partiel (31) du flux massique de gaz affluant dans une deuxième chambre (35) formée d'un deuxième côté de l'élément de distribution (4) et de la deuxième partie (33) du boîtier de module (12),
**caractérisé en ce que**
l'élément de commande (3) consiste en un ressort à bascule polystable (4) avec un évidement (5) à travers lequel le générateur de gaz (1) passe lors du passage d'une position d'enclenchement stable à l'autre du ressort à bascule (4).

2. Module d'airbag selon la revendication 1, dans lequel les orifices d'échappement du générateur de gaz (1) servent directement de sortie de gaz.

3. Module d'airbag selon la revendication 1 ou 2, dans lequel le ressort à bascule polystable (4) forme une surface de séparation (39) en échelon et/ou oblique par rapport à l'axe longitudinal du boîtier de module (12) pour le flux massique de gaz.

4. Module d'airbag selon une des revendications 1 à 3, dans lequel la deuxième partie (33) du boîtier de module (12) présente un orifice d'échappement du gaz vers l'intérieur du véhicule.

5. Module d'airbag selon l'une des revendications 1 à 4, dans lequel la deuxième partie (33) du boîtier de module (12) dispose d'une chambre de compression (36) dans laquelle le deuxième flux partiel (31) du flux massique de gaz peut être introduit, flux qui y établit une pression du gaz qui entraîne un mouvement de réaction de parties (37) du boîtier de module (12).

6. Module d'airbag selon la revendication 9, dans lequel les parties mobiles (37) du boîtier de module (12) sont reliées à un recouvrement (21) du module d'airbag dans le tableau de bord d'un véhicule, de telle sorte que le mouvement de réaction des parties (37) du boîtier de module (12) entraîne un mouvement du recouvrement (21) dans le tableau de bord.

7. Module d'airbag selon une des revendications 1 à 6, dans lequel l'amorçage du ressort à bascule (4) a lieu en fonction de l'état de gonflage du coussin gonflable (2).

8. Module d'airbag selon la revendication 7, dans lequel le ressort à bascule (4) est amorcé par au moins une bande de commande (9) fixée sur le coussin gonflable (2) au moment de la tension de la bande de commande (9) suite au gonflage du coussin gonflable (2).

9. Module d'airbag selon la revendication 8, dans lequel au moins une bande de commande (9) est fixée sur la face frontale interne du coussin gonflable (2).

10. Module d'airbag selon la revendication 8 ou 9, dans lequel au moins une bande de commande (9) se déchire après actionnement du ressort à bascule (4).

11. Module d'airbag selon la revendication 8 ou 9, dans lequel au moins une bande de commande (9) se détache d'une fixation arrière après actionnement de l'élément de commande (3) en raison des forces de traction qui sont exercées sur elle.

12. Module d'airbag selon une des revendications 1 à 11, dans lequel le ressort à bascule polystable (4) est doté d'une couche de matériau piézoélectrique (40) sur un côté ou sur deux côtés par rapport au côté du ressort à bascule dirigé vers le coussin gonflable (2) ou détourné de ce dernier, l'application d'une tension électrique correspondante entraînant un changement du ressort à bascule (4) entre au moins deux positions d'enclenchement stable.

13. Module d'airbag selon la revendication 14, dans lequel les orifices d'échappement du générateur de gaz (1) servent directement de sortie de gaz.

14. Module d'airbag selon la revendication 12 ou 13, dans lequel la deuxième partie (33) du boîtier de module (12) présente un orifice d'échappement du gaz vers l'intérieur du véhicule.

15. Module d'airbag selon une des revendications 12 à 14, dans lequel la deuxième partie (33) du boîtier de module (12) dispose d'une chambre de compression (36) dans laquelle le deuxième flux partiel (31) du flux massique de gaz peut être introduit, flux qui y établit une pression du gaz qui entraîne un mouvement de réaction de parties (37) du boîtier de module (12).

16. Module d'airbag selon la revendication 15, dans lequel les parties mobiles (37) du boîtier de module (12) sont reliées à un recouvrement (21) du module d'airbag dans le tableau de bord d'un véhicule, de telle sorte que le mouvement de réaction des parties (37) du boîtier de module (12) entraîne un mouvement du recouvrement (21) dans le tableau de bord.

17. Module d'airbag selon une des revendications 12 à 16, dans lequel l'amorçage de l'élément de commande (3) a lieu en fonction de l'état de gonflage du coussin gonflable (2).

18. Module d'airbag selon une des revendications 1 à 17, dans lequel l'amorçage du ressort à bascule (4) a lieu de telle sorte qu'après l'ouverture du capot de module (21) recouvrant le module et un gonflage du coussin gonflable (2) de telle sorte que l'avant du coussin gonflable se déplace de 20 cm environ, une partie considérable du flux massique de gaz soit déviée en tant que deuxième flux partiel (31) dans la deuxième partie (33) du boîtier de module (12) et que, dans une phase ultérieure et à condition que l'avant du coussin gonflable se déploie de plus de 20 cm environ, la plus grande partie du flux massique de gaz soit guidée dans la première partie (32) du boîtier de module (12) puis, de là, dans le coussin gonflable.

19. Module d'airbag selon la revendication 18, dans lequel l'amorçage du ressort à bascule (4) a, en outre, lieu de telle sorte qu'avant l'ouverture du capot de module (21) recouvrant le module, la plus grande partie du flux massique de gaz soit guidée dans la première partie (32) du boîtier de module (12).

20. Module d'airbag selon la revendication 18, dans lequel l'amorçage du ressort à bascule (4) a, en outre, lieu de telle sorte qu'avant l'ouverture du capot de module (21) recouvrant le module, la plus grande partie du flux massique de gaz soit guidée dans la deuxième partie (33) du boîtier de module (12).
